# FASCICULE DE BREVET EUROPEEN

(11) **EP 1 980 531 B1**
(45) Date de publication et mention de la délivrance du brevet: **29.02.2012**
(21) Numéro de dépôt: 08290243.8
(22) Date de dépôt: 13.03.2008
(51) Int. Cl.: C01B 39/36, C01B 37/00, C01B 37/02

(54) **Procédé de préparation d'une zéolithe de type structural MEL**
Verfahren zur Herstellung eines Zeoliths mit MEL-Struktur
Method for preparing a zeolite having MEL structure

(30) Priorité: 05.04.2007 FR 0702489
(43) Date de publication de la demande: 15.10.2008
(73) Titulaire: IFP Energies nouvelles, 92852 Rueil-Malmaison Cedex (FR)
(72) Inventeur: Bats, Nicolas, 69320 Feyzin (FR); Fecant, Antoine, 69530 Brignais (FR)

(56) Documents cités:
- WO-A-2004/013042
- US-A- 3 709 979

## Description

### Domaine technique

La présente invention se rapporte à un nouveau procédé de préparation d'une zéolithe de type structural MEL réalisé en présence d'une espèce structurante organique azotée comportant un hétérocycle contenant une fonction ammonium quaternaire. Ladite zéolithe de type structural MEL obtenue selon le procédé de l'invention trouve avantageusement son application en tant que catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.
Les zéolithes de type structural MEL sont décrites dans l'art antérieur (Ch. Baerlocher, W.M. Meier, D.H. Olson, Atlas of Zeolite Framework types, 5ème édition, 2001). Les zéolithes de type structural MEL comprennent en particulier la zéolithe ZSM-11, la Boralite D, la SSZ-46, la silicalite 2, la TS-2. De nombreuses méthodes de synthèse de ces zéolithes, en particulier de la zéolithe ZSM-11, sont connues. Par exemple, il est connu du brevet U.S. 3,709,979 de synthétiser la zéolithe de type structural MEL en utilisant un structurant organique choisi parmi le chlorure de tétrabutylphosphonium, le chlorure de benzyltriphénylphosphonium, le bromure de tétrabutylammonium et d'autres cations quaternaires du groupe 5-A.
D'autres agents structurants ont également déjà été décrits dans l'état de la technique pour la préparation de zéolithes de type structural MEL, en particulier pour la préparation de la zéolithe ZSM-11. Parmi ces agents structurants, on trouve des alkylènediamines possédant une chaîne centrale de 7 à 12 atomes de carbone (US 4,108,881), l'octylamine (US 4,894,212), des ammoniums diquaternaires (U.S. 4,941,963), le 1,8-diaminooctane et le 1,9-diaminononane (P.A. Jacobs et J.A. Martens, Studies in Surface Science and Catalysis, 33, p.147-166 (1987)), un cation ayant pour formule H₂ₙ₊₁CₙN⁺(CH₃)₃ où n peut être égal à 9, 10, 11 ou 12 (U.S. 5,213,786), le 3,5-diméthyl-N,N-diéthylpiperidinium ou un dérivé du 3,5-diméthylpiperidinium (WO 95/09812), le 2,2-diéthyloxyéthyltriméthylammonium (P.M. Piccione et M.E. Davis, Microporous and Mesoporous Materials, 49, p163-169 (2001)) et le cation N-butyl-N-cyclohexylpyrrolidinium (G. Sastre et al., Journal of Physcal Chemistry B, 107, p. 5432-5440 (2003)).

### Résumé et intérêt de l'invention

La présente invention a pour objet un procédé de préparation d'une zéolithe de type structural MEL comprenant au moins les étapes suivantes :
i) le mélange, en milieu aqueux, d'au moins une source d'au moins un élément tétravalent X et d'au moins une espèce organique azotée de formule (I) indiquée ci-dessous : 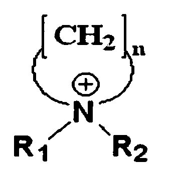 dans laquelle n représente le nombre de motif méthylène (CH₂) et est égal à 6, R1 et R2 représentent des groupes alkyles ayant de 2 à 7 atomes de carbone,
ii) le traitement hydrothermal dudit mélange jusqu'à ce que ladite zéolithe de type structural MEL se forme.

Il a été découvert que ladite espèce structurante organique azotée de formule (I) constituée d'un hétérocycle alkyle ayant 6 de carbone et comportant un cation ammonium quaternaire, lui-même lié à deux groupes alkyles R1 et R2 ayant de 2 à 7 atomes de carbone, mise en mélange avec au moins une source d'au moins un élément tétravalent et de l'eau, conduit à la production d'une zéolithe de type structural MEL de haute pureté. Toute autre phase cristallisée ou amorphe est généralement et très préférentiellement absente du solide cristallisé zéolithique de type structural MEL obtenu à l'issue du procédé de l'invention. De plus, une telle zéolithe de type structural MEL, préparée par le procédé selon l'invention, est obtenue avec une très bonne cristallinité. La zéolithe de type structural MEL obtenue par le procédé de l'invention est obtenue avec une excellente sélectivité pour des compositions de gel très variées.

### Description de l'invention

La présente invention a pour objet un procédé de préparation d'une zéolithe de type structural MEL comprenant au moins les étapes suivantes :
i) le mélange, en milieu aqueux, d'au moins une source d'au moins un élément tétravalent X et d'au moins une espèce organique azotée de formule (I) indiquée ci-dessous : 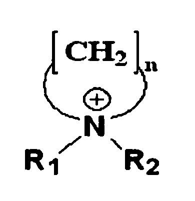 dans laquelle n représente le nombre de motif méthylène (CH₂) et est égal à 6, R1 et R2 représentent des groupes alkyles ayant de 2 à 7 atomes de carbone,
ii) le traitement hydrothermal dudit mélange jusqu'à ce que ladite zéolithe de type structural MEL se forme.

Conformément à l'invention, ladite espèce organique azotée de formule (I) joue le rôle de structurant de la zéolithe de type structural MEL préparée selon le procédé de l'invention. Elle est constituée d'un hétérocycle alkyle lequel comporte un cation ammonium quaternaire, lui-même lié à deux groupes alkyles R1 et R2 ayant de 2 à 7 atomes de carbone. Lesdits groupes alkyles se présentent sous la forme CₐH₂ₐ₊₁ où a est compris entre 2 et 7. Ils peuvent être identiques ou différents, de préférence identiques. Ils peuvent également être linéaires ou ramifiés, de préférence linéaires. Ladite espèce organique azotée de formule (1) est une espèce cationique dans laquelle n est égal à 6 : il s'agit de l'espèce cationique N,N-dialkylhexaméthylèneiminium. De façon très avantageuse, ladite espèce cationique de formule (I) est choisie parmi le cation N,N-dipropylhexaméthylèneiminium (n = 6 et R1 = R2 = C₃H₇) et le cation N,N-dibutylhexaméthylèneiminium (n = 6 et R1 = R2 = C₄H₉).
Ladite espèce organique azotée de formule (I) utilisée pour la mise en oeuvre de ladite étape (i) du procédé de l'invention est synthétisée par toute méthode connue de l'Homme du métier. S'agissant de la synthèse d'un cation N,N-dialkylhexaméthylèneiminium, on procède au mélange d'une mole d'hexaméthylèneimine, d'au moins 2 moles de 1-halogénoalcane et d'au moins 1 mole d'anion CO₃²⁻. Plus particulièrement, pour la synthèse du cation N,N-dipropylhexaméthylèneiminium, on procède au mélange d'une mole d'hexaméthylèneimine, d'au moins 2 moles de 1-halogénopropane et d'au moins 1 mole d'anion CO₃²⁻. Pour la synthèse du cation N,N-dibutylhexaméthylèneiminium, on procède au mélange d'une mole d'hexaméthylèneimine, d'au moins 2 moles de 1-halogénobutane et d'au moins 1 mole d'anion CO₃²⁻ . Généralement, le mélange formé d'au moins d'hexaméthylèneimine, de 1-halogénoalcane et d'anion CO₃²⁻ est porté à reflux pendant une durée comprise entre 5 et 15 heures. Après filtration, précipitation au moyen d'un solvant éthéré tel que le diéthyéther puis recristallisation dans un mélange éthanol/éther, ladite espèce organique azotée de formule (I) est obtenue à l'état pur.
L'anion associé au cation ammonium quaternaire présent dans l'espèce organique structurante pour la synthèse de la zéolithe de type structural MEL est choisi parmi l'anion acétate, l'anion sulfate, l'anion carboxylate, l'anion tétrafluoroborate, les anions halogénures tels que le fluorure, le chlorure, le bromure, l'iodure, l'anion hydroxyde ou une combinaison de plusieurs d'entre eux. De manière préférée, l'anion associé au cation ammonium quaternaire présent dans l'espèce structurante pour la zéolithe de type structural MEL est l'anion hydroxyde ou l'anion bromure. L'hydroxyde de N,N-dialkylhexaméthylèneiminium est préférentiellement obtenu par traitement à température ambiante d'une solution aqueuse de bromure de N,N-dialkylhexaméthylèneiminium par de l'oxyde d'argent.

Conformément à l'invention, au moins une source d'au moins un élément tétravalent X est incorporée dans l'étape (i) du procédé de préparation. X est préférentiellement choisi parmi le silicium, le germanium, le titane et le mélange d'au moins deux de ces éléments tétravalents et très préférentiellement X est le silicium. La ou les source(s) du(es)dit(s) élément(s) tétravalent(s) X peu(ven)t être tout composé comprenant l'élément X et pouvant libérer cet élément en solution aqueuse sous forme réactive. L'élément X peut être incorporé dans le mélange sous une forme oxydée XO₂ ou sous tout autre forme. Lorsque X est le titane, on utilise avantageusement Ti(EtO)₄ comme source de titane. Lorsque X est le germanium on utilise avantageusement GeO₂ amorphe comme source de germanium. Dans le cas préféré où X est le silicium, la source de silicium peut être l'une quelconque desdites sources couramment utilisées pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX.

Selon un premier mode préféré de réalisation du procédé de l'invention, au moins une source d'au moins un élément trivalent Y est incorporée dans le mélange pour la mise en oeuvre de ladite étape (i) du procédé de préparation selon l'invention. Ledit élément trivalent Y est préférentiellement choisi parmi l'aluminium, le bore, le fer, l'indium, le gallium ou le mélange d'au moins deux de ces éléments trivalents et très préférentiellement Y est l'aluminium. La ou les source(s) du(es)dit(s) élément(s) trivalent(s) Y peu(ven)t être tout composé comprenant l'élément Y et pouvant libérer cet élément en solution aqueuse sous forme réactive. L'élément Y peut être incorporé dans le mélange sous une forme oxydée YO_{b} avec 1 ≤ b ≤ 3 (b étant un nombre entier ou un nombre rationnel) ou sous toute autre forme. Dans le cas préféré où Y est l'aluminium, la source d'aluminium est de préférence de l'aluminate de sodium ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Selon un deuxième mode préféré de réalisation du procédé de l'invention, au moins un métal alcalin et/ou alcalino-terreux M est incorporé dans le mélange pour la mise en oeuvre de ladite étape (i) du procédé de préparation selon l'invention et est choisi parmi le lithium, le potassium, le sodium, le magnésium, le calcium et le mélange d'au moins deux de ces métaux. De préférence, ledit métal M est un métal alcalin et de manière très préférée il s'agit du sodium.

Selon un troisième mode préféré de réalisation du procédé de l'invention, l'anion fluorure F- est incorporé dans le mélange pour la mise en oeuvre de ladite étape (i) du procédé de préparation selon l'invention. On utilise, comme source d'anion fluorure, un sel de fluorure tels que NH₄F, NaF, KF, LiF et le mélange d'au moins deux de ces sels ou l'acide fluorhydrique HF. De manière préférée, la source d'anion fluorure est l'acide fluorhydrique HF en solution aqueuse.

Les modes préférés de réalisation du procédé de l'invention décrits ci-dessus peuvent être réalisés simultanément ou indépendamment les uns des autres. En particulier, il est avantageux que ladite étape (i) du procédé de l'invention soit mise en oeuvre en présence d'une source d'un élément trivalent, de préférence l'aluminium, et d'un métal alcalin et/ou alcalino-terreux, de préférence le sodium. Il est également avantageux que ladite étape (i) du procédé de l'invention soit mise en oeuvre en présence d'une source d'un anion fluorure.

Conformément au procédé de préparation selon l'invention, le mélange réactionnel obtenu à l'étape (i) présente une composition molaire exprimée par la formule :

XO₂ : v YO_{b} : w M_{2/m}O : x F⁻ : y H₂O : z R⁺

- v étant compris entre 0 et 0,5, de préférence entre 0,005 et 0,3
- w étant compris entre 0 et 1, de préférence entre 0,05 et 0,5
- x étant compris entre 0 et 1, de préférence entre 0,1 et 0,8,
- y étant compris entre 1 et 100, de préférence entre 10 et 70
- z étant compris entre 0,04 et 2, de préférence entre 0,06 et 1, et de manière très préférée entre 0,1 et 0,8,
- b étant compris entre 1 et 3, (b étant un nombre entier ou rationnel)
- m étant égal à 1 ou 2,
où X, Y et M ont la même définition que précédemment, à savoir X est un ou plusieurs élément(s) tétravalent(s) choisi(s) dans le groupe formé par éléments suivants : silicium, germanium, titane, de manière très préféré X est le silicium, où Y est un ou plusieurs élément(s) trivalent(s) choisi(s) dans le groupe formé par les éléments suivants : aluminium, fer, bore, indium et gallium, de manière très préférée Y est l'aluminium et où M est un ou plusieurs metal(aux) alcalin(s) et/ou alcalino-terreux choisi(s) parmi le lithium, le sodium, le potassium, le calcium, le magnésium et le mélange d'au moins deux de ces métaux, de manière très préférée M est le sodium, R⁺ est l'espèce organique cationique azotée de formule (I). v, w, x, y et z représentent respectivement le nombre de moles de YO_{b}, de M_{2/m}O, de F⁻, de H₂O et de R⁺.

L'étape (i) du procédé selon l'invention consiste à préparer un mélange réactionnel aqueux appelé gel et renfermant au moins une source d'au moins un élément tétravalent X, de préférence un oxyde XO₂, éventuellement au moins une source d'au moins un élément trivalent Y, de préférence un oxyde YO_{b}, au moins une espèce organique de formule (1) constituée d'un hétérocycle alkyle comportant un cation ammonium quaternaire, éventuellement au moins une source d'un ou plusieurs métal(aux) alcalin(s) et/ou alcalino-terreux et éventuellement au moins une source d'anion fluorure. Les quantités desdits réactifs sont ajustées de manière à conférer à ce gel une composition permettant sa cristallisation en une zéolithe de type structural MEL.

Il peut être avantageux d'additionner des germes au mélange réactionnel au cours de ladite étape (i) du procédé de l'invention afin de réduire le temps nécessaire à la formation des cristaux de zéolithe de type structural MEL et/ou la durée totale de cristallisation. Lesdits germes favorisent également la formation de ladite zéolithe de type structural MEL au détriment d'impuretés. De tels germes comprennent des solides cristallisés, notamment des cristaux de zéolithe de type structural MEL. Les germes cristallins sont généralement ajoutés dans une proportion comprise entre 0,01 et 10 % de la masse de la source de l'élément X, de préférence de l'oxyde XO₂, utilisée dans le mélange réactionnel.

Conformément à l'étape (ii) du procédé selon l'invention, le gel est soumis à un traitement hydrothermal, préférentiellement réalisé à une température comprise entre 80°C et 200°C, jusqu'à ce que ladite zéolithe de type structural MEL se forme. Le gel est avantageusement mis sous conditions hydrothermales sous une pression de réaction autogène, éventuellement en ajoutant du gaz, par exemple de l'azote, à une température comprise entre 80°C et 200°C, de préférence entre 140°C et 180°C, jusqu'à la formation des cristaux de zéolithe de type structural MEL. La durée nécessaire pour obtenir la cristallisation varie généralement entre 1 et 50 jours, de préférence entre 1 et 21 jours et de manière plus préférée entre 3 et 14 jours. La mise en réaction s'effectue généralement sous agitation ou en absence d'agitation, de préférence en présence d'agitation.

A la fin de la réaction, lorsque ladite zéolithe de type structural MEL est formée à la suite de la mise en oeuvre de ladite étape (ii) du procédé de préparation de l'invention, la phase solide formée de la zéolithe de type structural MEL est filtrée, lavée puis séchée. Le séchage est généralement réalisé à une température comprise entre 20 et 150°C, de préférence entre 70 et 120°C, pendant une durée comprise entre 5 et 20 heures. La zéolithe de type structural MEL, séchée, est généralement analysée par diffraction des rayons X, cette technique permettant également de déterminer la pureté de ladite zéolithe obtenue par le procédé de l'invention. De manière très avantageuse, le procédé de l'invention conduit à la formation d'une zéolithe de type structural MEL pure, en l'absence de toute autre phase cristallisée ou amorphe. Ladite zéolithe, après l'étape de séchage, est ensuite prête pour des étapes ultérieures telles que la calcination et l'échange d'ions. Pour ces étapes, toutes les méthodes conventionnelles connues de l'Homme du métier peuvent être employées.

La calcination de la zéolithe de type structural MEL obtenue selon le procédé de l'invention est préférentiellement réalisée à une température comprise entre 500 et 700°C et pendant une durée comprise entre 5 et 15 heures. La zéolithe de type structural MEL obtenue à l'issue de l'étape de calcination est dépourvue de toute espèce organique et en particulier de l'espèce organique azotée de formule (I).

En règle générale, le ou les cation(s) M de la zéolithe de type structural MEL obtenue par le procédé de l'invention, peu(ven)t être remplacé(s) par un ou des cation(s) quelconque de métaux et en particulier ceux des groupes IA, IB, IIA, IIB, IIIA, IIIB (y compris les terres rares), VIII (y compris les métaux nobles) de même que par le plomb, l'étain et le bismuth. L'échange est réalisé au moyen de sels hydrosolubles quelconques contenant le cation approprié.

Il est également avantageux d'obtenir la forme hydrogène de la zéolithe de type structural MEL obtenue selon le procédé de l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe de type structural MEL en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe obtenue par le procédé de l'invention peut être utilisée après échange ionique comme solide acide pour la catalyse dans les domaines du raffinage et de la pétrochimie. Elle peut également être utilisée comme adsorbant pour le contrôle de la pollution ou comme tamis moléculaire pour la séparation.

Par exemple, lorsqu'elle est utilisée comme catalyseur, la zéolithe préparée selon le procédé de l'invention, est calcinée, échangée et est de préférence sous forme hydrogène, et peut être associée à une matrice inorganique, qui peut être inerte ou catalytiquement active, et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme la silice, les différentes formes d'alumine, la magnésie, la zircone, les oxydes de titane, de bore, de zirconium, les phosphates d'aluminium, de titane, les argiles kaoliniques, les bentonites, les montmorillonites, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active.

La zéolithe préparée selon le procédé de l'invention peut également être associée à au moins une autre zéolithe et jouer le rôle de phase active principale ou d'additif.

La phase métallique est introduite sur la zéolithe seule, la matrice inorganique seule
ou l'ensemble matrice inorganique-zéolithe par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les métaux peuvent être introduits soit tous de la même façon, soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux
Les compositions catalytiques comportant la zéolithe de type structural MEL préparée selon le procédé de l'invention, conviennent de façon générale à la mise en oeuvre des principaux procédés de transformation d'hydrocarbures et des réactions de synthèse de composés organiques tels que les éthers.

Toute méthode de mise en forme connue de l'homme du métier convient pour le catalyseur comportant la zéolithe de type structural MEL. On pourra utiliser, par exemple, le pastillage ou l'extrusion ou la mise sous forme de billes. La mise en forme du catalyseur contenant la zéolithe préparée selon le procédé de l'invention et se présentant au moins en partie sous forme acide est généralement telle que le catalyseur est de préférence sous forme d'extrudés ou de billes en vue de son utilisation.

L'invention est illustrée par les exemples suivants qui ne présentent, en aucun cas, un caractère limitatif.

### Exemple 1: préparation du bromure de N,N-dibutylhexaméthylèneiminium (structurant A1).

50 g d'hexaméthylèneimine (0,50 mole, 99%, Aldrich) sont ajoutés dans un ballon de 1 L contenant 200 ml d'éthanol, 105 g de carbonate de potassium (0,76 mole, 99%, Aldrich) et 173 g de 1-bromobutane (1,26 mole, 99%, Aldrich). Le milieu réactionnel est agité et porté à reflux pendant 8 h. Le mélange est ensuite refroidi à température ambiante puis filtré. Le filtrat est versé dans 300 ml de diéthyléther puis le précipité formé est filtré et lavé avec 100 ml de diéthyléther. Le solide obtenu est recristallisé dans un mélange éthanol/éther. Le solide obtenu est séché sous vide pendant 12 h. On obtient 82 g d'un solide blanc (soit un rendement de 56%).
Le produit possède le spectre ¹H RMN attendu. ¹H RMN (CDCl₃, ppm/TMS) : 0,98 (6H,t) ; 1,44 (4H,sext) ; 1,69 (4H,m) ; 1,76 (4H,m) ; 2,00 (4H,m) ; 3,43 (4H,t) ; 3,66(4H,t).

### Exemple 2: préparation de l'hydroxyde de N,N-dibutylhexaméthylèneiminium, (structurant A2).

29 g d'Ag₂O (0,125 mole, 99%, Aldrich) sont ajouté dans un bécher en teflon de 250 ml contenant 30 g du structurant A1 (0,10 mole) et 100 ml d'eau déionisée. Le milieu réactionnel est agité à l'abri de la lumière pendant 12h. Le mélange est ensuite filtré. Le filtrat obtenu est composé d'une solution aqueuse d'hydroxyde de N,N-dibutylhexaméthylèneiminium. Le dosage de cette espèce est réalisé par RMN du proton en utilisant l'acide formique en tant qu'étalon.

### Exemple 3 : préparation d'une zéolithe de type structural MEL silicique selon l'invention.

21,27 g d'une suspension colloïdale de silice, connue sous le terme commercial © Ludox AS-40 commercialisée par Aldrich, est incorporée dans une solution composée de 23,19 g d'une solution aqueuse de structurant A2 à 23,33 % massique et de 54,54 g d'eau déionisée. La composition molaire du mélange est la suivante : SiO₂ ; 0,17 A2 ; 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 4 : préparation d'une zéolithe de type structural MEL aluminosilicique selon l'invention.

21,27 g d'une suspension colloïdale de silice, connue sous le terme commercial © Ludox AS-40 commercialisée par Aldrich, est incorporée dans une solution composée de 23,19 g d'une solution aqueuse de structurant A2 à 23,33 % massique, de 0,09 g d'hydroxyde d'aluminum (Aldrich) et de 54,48 g d'eau déionisée. La composition molaire du mélange est la suivante : SiO₂ ; 0,0042 Al₂O₃ ; 0,17 A2 ; 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min. Le produit cristallisé obtenu est filtré, lavé à l'eau déionisée (pour atteindre un pH neutre) puis séché une nuit à 100°C.
Le produit solide séché a été analysé par diffraction des rayons : le solide cristallisé obtenu est une zéolithe de type structural MEL pure.

### Exemple 5 : préparation d'une zéolithe de type structural MEL aluminosilicique selon l'invention.

20,61 g d'une suspension colloïdale de silice, connue sous le terme commercial © Ludox AS-40 commercialisée par Aldrich, est incorporée dans une solution composée de 0,85 g d'aluminate de sodium (Carlo Erba), 1,62 g de soude (Prolabo), 6,68 g du structurant A1 dans 69,24 g d'eau déionisée. La composition molaire du mélange est la suivante : SiO₂ 0,017 Al₂O₃ ; 0,17 Na₂O ; 0,17 A1 ; 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 6 : préparation d'une zéolithe de type structural MEL germanosilicique selon l'invention.

9,99 g d'une suspension colloïdale de silice, connue sous le terme commercial © Ludox AS-40 commercialisée par Aldrich, est incorporée dans une solution composée de 2,97 g d'oxyde de germanium amorphe (Aldrich), de 27,99 g d'une solution aqueuse de structurant A2 à 23,33 % massique et de 58,08 g d'eau déionisée. La composition molaire du mélange est la suivante : 0,7 SiO₂ 0,3 GeO₂; 0,3 A2 ; 50 H₂O. Le mélange est agité vigoureusement pendant une demi-heure. Le mélange est ensuite transféré, après homogénéisation, dans un autoclave de 150 mL en acier inoxydable. L'autoclave est chauffé pendant 7 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 7 : préparation d'une zéolithe de type structural MEL germanosilicique selon l'invention.

12,27 g d'une suspension colloïdale de silice, connue sous le terme commercial © Ludox AS-40 commercialisée par Aldrich, est incorporée dans une solution composée de 0,96 g d'oxyde de germanium amorphe (Aldrich), de 44,61 g d'une solution aqueuse de structurant A2 à 23,33 % massique, de 2,28 g d'une solution aqueuse de HF à 39,5 % massique et de 38,88 g d'eau déionisée. La composition molaire du mélange est la suivante : 0,9 SiO₂ ; 0,1 GeO₂ ; 0,5 A2 ; 0,5 HF ; 50 H₂O. Le mélange est agité vigoureusement pendant une demi-heure. Le mélange est ensuite transféré, après homogénéisation, dans un autoclave de 150 mL en acier inoxydable. L'autoclave est chauffé pendant 14 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 8 : préparation du bromure de N,N-dipropylhexaméthylèneiminium (structurant B1).

50 g d'hexaméthylèneimine (0,50 mole, 99%, Aldrich) sont ajoutés dans un ballon de 1 L contenant 200 ml d'éthanol, 105 g de carbonate de potassium (0,76 mole, 99%, Aldrich) et 155 g de 1-bromopropane (1,26 mole, 99%, Aldrich). Le milieu réactionnel est agité et porté à reflux pendant 8 h. Le mélange est ensuite refroidi à température ambiante puis filtré. Le filtrat est versé dans 300 ml de diéthyléther puis le précipité formé est filtré et lavé avec 100 ml de diéthyléther. Le solide obtenu est recristallisé dans un mélange éthanol/éther. Le solide obtenu est séché sous vide pendant 12 h. On obtient 93,72 g d'un solide blanc (soit un rendement de 71 %).
Le produit possède le spectre ¹H RMN attendu. ¹H RMN (CDCl₃, ppm/TMS) : 1,00 (6H,t) ; 1,71 (4H,m) ; 1,74 (4H,sext) ; 1,96 (4H,m) ; 3,36 (4H,t) ; 3,62(4H,t).

### Exemple 9 : préparation de l'hydroxyde de N,N-dipropylhexaméthylèneiminium (structurant B2).

32 g d'Ag₂O (0,14 mole, 99%, Aldrich) sont ajouté dans un becher en teflon de 250 ml contenant 30 g du structurant B1 (0,11 mole) et 100 ml d'eau déionisée. Le milieu réactionnel est agité à l'abri de la lumière pendant 12h. Le mélange est ensuite filtré. Le filtrat obtenu est composé d'une solution aqueuse d'hydroxyde de N,N-dipropylhexaméthylèneiminium. Le dosage de cette espèce est réalisé par RMN du proton en utilisant l'acide formique en tant qu'étalon.

### Exemple 10 : préparation d'une zéolithe de type structural MEL silicique selon l'invention.

21,42 g d'une suspension de silice, connue sous le terme commercial © Ludox AS-40 commercialisée par Aldrich, est incorporée dans une solution composée de 18,87 g d'une solution aqueuse de structurant B2 à 25,35 % massique et de 58,71 g d'eau déionisée. La composition molaire du mélange est la suivante : SiO₂; 0,17 B2 ; 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 14 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 11 : préparation d'une zéolithe de type structural MEL aluminosilicique selon l'invention.

20,79 g d'une suspension de silice, connue sous le terme commercial © Ludox AS-40 commercialisée par Aldrich, est incorporée dans une solution composée de 0,21 g d'aluminate de sodium (Carlo Erba), 1,79 g de soude (Prolabo), 6,09 g du structurant B1 dans 70,07 g d'eau déionisée. La composition molaire du mélange est la suivante : SiO₂; 0,004 Al₂O₃ ; 0,17 Na₂O ; 0,17 B1 ; 33,33 H₂O. Le mélange est agité vigoureusement pendant une demi-heure. Le mélange est ensuite transféré, après homogénéisation, dans un autoclave de 150 mL en acier inoxydable. L'autoclave est chauffé pendant 5 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 12 : préparation d'une zéolithe de type structural MEL germanosilicique selon l'invention.

9,6 g d'une suspension colloïdale de silice, connue sous le terme commercial © Ludox AS-40 commercialisée par Aldrich, est incorporée dans une solution composée de 2,88 g d'oxyde de germanium amorphe (Aldrich), de 40,23 g d'une solution aqueuse de structurant B2 à 22,82 % massique, de 2,28 g d'une solution aqueuse de HF à 39,5 % w/w et de 44,04 g d'eau déionisée. La composition molaire du mélange est la suivante : 0,7 SiO₂ ; 0,3 GeO₂ ; 0,5 B2 ; 0,5 HF ; 50 H₂O. Le mélange est agité vigoureusement pendant une demi-heure. Le mélange est ensuite transféré, après homogénéisation, dans un autoclave de 150 mL en acier inoxydable. L'autoclave est chauffé pendant 6 jours à 170°C sous agitation (500 trs/min). Le produit cristallisé obtenu est filtré, lavé à l'eau déionisée (pour atteindre un pH neutre) puis séché une nuit à 100°C.
Le produit solide séché a été analysé par diffraction des rayons X : le solide cristallisé obtenu est une zéolithe de type structural MEL pure.

### Exemple 13 : préparation d'un catalyseur comprenant une zéolithe de type structural MEL synthétisée dans le système Si/Al

La zéolithe utilisée dans cet exemple est la zéolithe de type structural MEL brute de synthèse obtenue dans le système Si/AI de l'exemple 4. Cette zéolithe présente un rapport atomique Si/AI global de 135.
Cette zéolithe de type structural MEL subit tout d'abord une calcination dite sèche à 550°C sous flux d'air durant 8 heures de manière à éliminer l'espèce structurante organique azotée A2. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 heures sous air et calcinés à 550°C pendant 2 heures sous flux d'air dans un four à moufle. Ils constituent le support du catalyseur.
Du platine est déposé sur l'alumine de ce support par échange anionique avec de l'acide hexachloroplatinique en présence d'un agent compétiteur (acide chlorhydrique). Le support échangé est ensuite séché à 120°C pendant 12 heures sous air et calciné à 550°C sous débit d'air sec pendant 1 heure.
Le catalyseur ainsi préparé est composé en teneur pondérale de 50% de zéolithe de type structural MEL forme hydrogène, de 49,8 % d'alumine et de 0,2% de platine.

## Revendications

1. Procédé de préparation d'une zéolithe de type structural MEL comprenant au moins les étapes suivantes :
i) le mélange, en milieu aqueux, d'au moins une source d'au moins un élément tétravalent X et d'au moins une espèce organique azotée de formule (I) 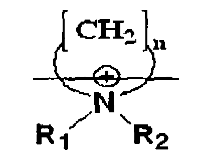 dans laquelle n représente le nombre de motif méthylène (CH₂) et est égal à 6, R1 et R2 représentent des groupes alkyles ayant de 2 à 7 atomes de carbone,
ii) le traitement hydrothermal dudit mélange jusqu'à ce que ladite zéolithe de type structural MEL se forme, à une température comprise entre 80 et 200°C pendant une durée de 1 à 50 jours.

2. Procédé de préparation selon la revendication 1 tel que ladite espèce organique azotée de formule (I) est choisie parmi le cation N,N-dipropylhexaméthylèneiminium et le cation N,N-dibutylhexaméthyléneiminium.

3. Procédé de préparation selon la revendication 1 ou la revendication 2 tel que l'élément tétravalent X est choisi parmi le silicium, le germanium, le titane et le mélange d'au moins deux de ces éléments tétravalents.

4. Procédé de préparation selon la revendication 3 tel que l'élément X est le silicium.

5. Procédé de préparation selon l'une des revendications 1 à 4 tel qu'au moins une source d'au moins un élément trivalent Y est incorporée dans le mélange pour la mise en oeuvre de ladite étape i).

6. Procédé de préparation selon la revendication 5 tel que ledit élément Y est l'aluminium.

7. Procédé de préparation selon l'une des revendications 1 à 6 tel qu'au moins un métal alcalin et/ou alcalino-terreux M est incorporé dans le mélange pour la mise en oeuvre de ladite étape i).

8. Procédé de préparation selon la revendication 7 tel que ledit métal M est le sodium.

9. Procédé de préparation selon l'une des revendications 1 à 8 tel que l'anion fluorure est incorporé dans le mélange pour la mise en oeuvre de ladite étape i).

10. Procédé de préparation selon l'une des revendications 1 à 9 tel que le mélange réactionnel obtenu à l'étape (i) présente une composition molaire exprimée par la formule XO₂ : v YO_{b} : w M_{2/m}O : x F : y H₂O : z R⁺ , dans laquelle v est compris entre 0 et 0,5, w est compris entre 0 et 1, x est compris entre 0 et 1, y est compris entre 1 et 100, z est compris entre 0,04 et 2, b est compris entre 1 et 3, (b étant un nombre entier ou rationnel), m est égal à 1 ou 2, R⁺ étant l'espèce organique cationique azotée de formule (I), v, w, x, y et z représentant respectivement le nombre de moles de YO_{b}, de M_{2/m}O, de F⁻, de H₂O et de R⁺.

11. Procédé de préparation selon l'une des revendications 1 à 10 tel que des germes sont additionnés au mélange réactionnel au cours de ladite étape i).

12. Procédé de préparation selon l'une des revendications 1 à 11 tel que la phase solide formée de la zéolithe de type structural MEL, obtenue à l'issue de ladite étape ii), est filtrée, lavée puis séchée.

## Claims

1. Process for preparation of a MEL-structural-type zeolite that comprises at least the following stages:
i) the mixture, in aqueous medium, of at least one source of at least one tetravalent element X and at least one nitrogen-containing organic radical oF formula (I) 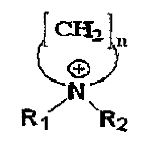 in which n represents the methylene group number (CH₂) and is equal to 6, and R1 and R2 represenT alkyl groups that come in the form CₐH₂ₐ₊₁, where a is between 2 and 7,
ii) the hydrothermal treatment of said mixture until said MEL-structural-type zeolite is formed, at a temperature of between 80°C and 200°C, during I to 50 days.

2. Process for preparation according to claim 1, such that said nitrogen-containing organic radical of formula (I) is selected from among the N,N-dipropylhexamethylene iminium cation and the N,N-dibutylhexamethylene iminium cation.

3. Process for preparation according to claim 1 or claim 2, such that the tetravalent element X is selected from among silicon, germanium, titanium and the mixture of at least two of these tetravalent elements.

4. Process for preparation according to claim 3, such that the element X is silicon.

5. Process for preparation according to one of claims 1 to 4, such that at least one source of at least one trivalent element Y is incorporated in the mixture for the implementation of said stage i).

6. Process for preparation according to claim 5, such that said element Y is aluminum.

7. Process for preparation according to one of claims 1 to 6, such that at least one alkaline metal and/or alkaline-earth metal M is incorporated in the mixture for the implementation of said stage i).

8. Process for preparation according to claim 7, such that said metal M is sodium.

9. Process for preparation according to one of claims 1 to 8, such that the fluoride anion is incorporated in the mixture for the implementation of said stage i).

10. Process for preparation according to one of claims 1 to 9, such that the reaction mixture that is obtained in stage (i) has a molar composition that is expressed by the formula XO₂ : v YO_{b} : w M_{2/m}O : x F⁻ : y H₂O : z R⁺, in which v is between 0 and 0.5, w is between 0 and 1, x is between 0 and I, y is between I and 100, z is between 0.04 and 2, b is between 1 and 3 (whereby b is a whole number or rational number), and m is equal to I or 2, whereby R⁻¹ is the nitrogen-containing, cationic organic radical of formula (I), and whereby v, w, x, y and z respectively represent the number of mols of YO_{b}, M_{2/m}O, F⁻, H₂O and R⁺.

11. Process for preparation according to one of claims 1 to 10, such that nuclei are added to the reaction mixture during said stage i).

12. Process for preparation according to one of claims 1 to 11, such that the solid phase that is formed by the MEL-structural-type zeolite, obtained at the end of said stage ii), is filtered, washed, and then dried.

## Patentansprüche

1. Verfahren zur Herstellung eines Zeolithen des Strukturtyps MEL, das mindestens die folgenden Schritte umfasst:
i) Mischen, in wässrigem Medium, mindestens einer Quelle mindestens eines vierwertigen Elements X mit mindestens einer organischen stickstoffhaltigen Spezies mit der Formel (I) 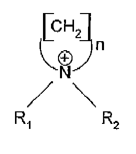 worin n für die Anzahl an Methylengruppen (CH₂) steht und gleich 6 ist, R₁ und R₂ für Alkylgruppen mit 2 bis 7 Kohlenstoffatomen stehen,
ii) hydrothermisches Behandeln des Gemisches, bis sich der Zeolith des Strukturtyps MEL bildet, bei einer Temperatur im Bereich zwischen 80 und 200 °C während einer Dauer von 1 bis 50 Tagen.

2. Verfahren zur Herstellung nach Anspruch 1, wobei die organische stickstoffhaltige Spezies mit der Formel (I) aus dem Kation N,N-Dipropylhexamethyleniminium und dem Kation N,N-Dibutylhexamethyleniminium ausgewählt ist.

3. Verfahren zur Herstellung nach Anspruch 1 oder Anspruch 2, wobei das vierwertige Element X aus Silicium, Germanium, Titan und dem Gemisch aus mindestens zwei dieser vierwertigen Elemente ausgewählt ist.

4. Verfahren zur Herstellung nach Anspruch 3, wobei das Element X Silicium ist.

5. Verfahren zur Herstellung nach einem der Ansprüche 1 bis 4, wobei mindestens eine Quelle mindestens eines dreiwertigen Elements Y in das Gemisch zur Durchführung des Schritts i) integriert wird.

6. Verfahren zur Herstellung nach Anspruch 5, wobei das Element Y Aluminium ist.

7. Verfahren zur Herstellung nach einem der Ansprüche 1 bis 6, wobei mindestens ein alkalisches und/oder erdalkalisches Metall M in das Gemisch zur Durchführung des Schritts i) integriert wird.

8. Verfahren zur Herstellung nach Anspruch 7, wobei das Metall M Natrium ist.

9. Verfahren zur Herstellung nach einem der Ansprüche 1 bis 8, wobei das Fluoridanion in das Gemisch zur Durchführung des Schritts i) integriert wird.

10. Verfahren zur Herstellung nach einem der Ansprüche 1 bis 9, wobei das Reaktionsgemisch, das in Schritt (i) erhalten wurde, eine Molzusammensetzung aufweist, die durch die Formel XO₂ : v YO_{b} : w M_{2/m}O : x F⁻ : y H₂O : z R⁺ ausgedrückt wird, worin v im Bereich zwischen 0 und 0,5 liegt, w im Bereich zwischen 0 und 1 liegt, x im Bereich zwischen 0 und 1 liegt, y im Bereich zwischen 1 und 100 liegt, z im Bereich zwischen 0,04 und 2 liegt, b im Bereich zwischen 1 und 3 liegt, (wobei b eine ganze Zahl oder eine rationale Zahl ist), m gleich 1 oder 2 ist, wobei R⁺ die organische stickstoffhaltige Kationspezies mit der Formel (I) ist, v, w, x, y und z jeweils für die Molanzahl von YO_{b}, M₂/ₘO, F⁻, H₂O und R⁺ steht.

11. Verfahren zur Herstellung nach einem der Ansprüche 1 bis 10, wobei dem Reaktionsgemisch im Verlauf von Schritt i) Keime zugegeben werden.

12. Verfahren zur Herstellung nach einem der Ansprüche 1 bis 11, wobei die gebildete feste Phase des Zeolithen des Strukturtyps MEL, der am Ende des Schritts ii) erhalten wurde, filtriert, gewaschen, dann getrocknet wird.
